# EUROPEAN PATENT APPLICATION

(11) **EP 3 160 120 A1**
(43) Date of publication of application: **26.04.2017**
(21) Application number: 16174796.9
(22) Date of filing: 16.06.2016
(51) Int. Cl.: H04N 1/32, H04N 1/00

(54) **IMAGE PROCESSOR AND IMAGE FORMING APPARATUS**

(30) Priority: 26.08.2015 JP 2015166959
(71) Applicant: Oki Data Corporation, Tokyo 108-8551 (JP)
(72) Inventor: KOBAYASHI, Fumiyuki, Tokyo 108-8551 (JP)
(74) Representative: Betten & Resch

(57) **Abstract**

An image processor (2) includes a detector (52, 53), a processor (54), and a generator (55). The detector (52, 53) is configured to detect whether a specific pattern (82, 85, 85A) is present at a first position in first image data. The processor (54) is configured to generate data information, based on a detection result derived from the detector (52, 53). The generator (55) is configured to generate second image data by disposing the data information at a second position that corresponds to the first position.

## Description

### BACKGROUND

The invention relates to an image processor that processes image data, and an image forming apparatus that forms an image on a print medium.

Some image forming apparatuses are provided with a scanning function. For example, Japanese Unexamined Patent Application Publication No. 2010-171636 discloses an image forming apparatus provided with a scanner section that reads an image printed on one side of a print medium, and a print section that performs printing on the other side opposite to the side of the print medium from which the image has been read.

### SUMMARY

In general, it is desirable that an electronic apparatus have high user-friendliness, and further improvement in user-friendliness is expected for an image processor and an image forming apparatus as well.

It is desirable to provide an image processor and an image forming apparatus that make it possible to improve user-friendliness.

An image processor according to an illustrative embodiment of the invention includes: a detector configured to detect whether a specific pattern is present at a first position in first image data; a processor configured to generate data information, based on a detection result derived from the detector; and a generator configured to generate second image data by disposing the data information at a second position that corresponds to the first position.

An image forming apparatus according to an illustrative embodiment of the invention includes a reader configured to read first image data from a first print medium; a modifying section configured to modify second image data, based on the first image data; and an image forming section configured to form an image, based on the second image data modified by the modifying section.

### BRIEF DESCRIPTION OF THE DRAWINGS

FIG. 1 is a block diagram illustrating an example of a configuration of an image forming apparatus according to an example embodiment.
FIG. 2 describes an example of an operation in the image forming apparatus according to a first example embodiment.
FIG. 3 is a block diagram illustrating an example of a control mechanism of the image forming apparatus according to the first example embodiment.
FIG. 4 is a block diagram illustrating an example of a software configuration in a host PC illustrated in FIG. 3.
FIG. 5 illustrates an example of an operation of an additional information setting section illustrated in FIG. 4.
FIG. 6A is a flowchart illustrating an example of an operation of the image forming apparatus according to the first example embodiment.
FIG. 6B is a flowchart illustrating an example of the operation of the image forming apparatus according to the first example embodiment.
FIG. 7 describes an example of a print medium according to a modified embodiment.
FIG. 8 describes an example of an operation in the image forming apparatus according to the second example embodiment.
FIG. 9 is a block diagram illustrating an example of a control mechanism of the image forming apparatus according to a second example embodiment.
FIG. 10 illustrates an example of a software configuration in a server illustrated in FIG. 9.
FIG. 11 describes an example of a configuration of a database illustrated in FIG. 10.
FIG. 12 describes an example of an operation of a scoring processor illustrated in FIG. 11.
FIG. 13A is a flowchart illustrating an example of an operation of the image forming apparatus according to the second example embodiment.
FIG. 13B is a flowchart illustrating an example of an operation of the image forming apparatus according to the second example embodiment.
FIG. 14 is a block diagram illustrating an example of the control mechanism of the image forming apparatus according to a modified embodiment of a second example embodiment.

### DETAILED DESCRIPTION

In the following, some example embodiments of the invention are described in detail with reference to the accompanying drawings. Note that the following description is directed to illustrative examples of the invention and not to be construed as limiting to the invention. Also, factors such as arrangement, dimensions, and a dimensional ratio of elements illustrated in each drawing are illustrative only and not to be construed as limiting to the invention. A description is given in detail in the following order.
1. First example embodiment
2. Second example embodiment

### [1. First Example Embodiment]

### [Configuration Example]

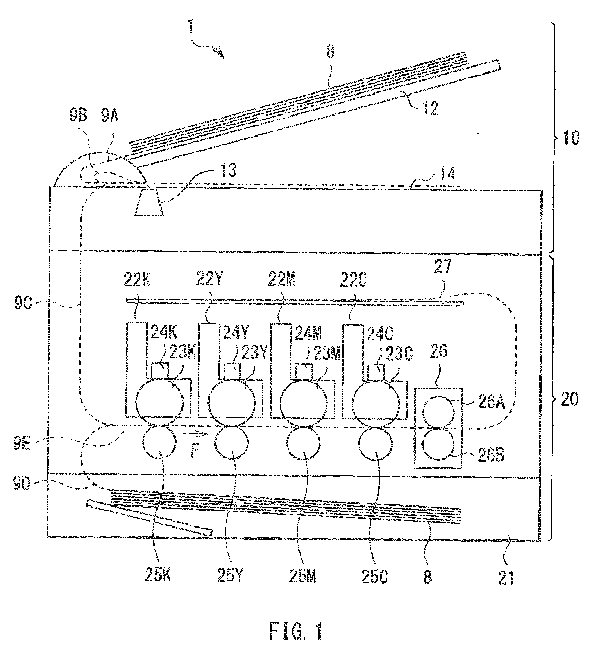

FIG. 1 illustrates an example of a configuration of an image forming apparatus (an image forming apparatus 1) according to a first example embodiment of the invention. The image forming apparatus 1 may be a so-called multifunctional peripheral (MFP) that may have functions as, for example but not limited to, a copy machine, a facsimile, and a scanner. The image forming apparatus 1 may include an image reading unit 10 and an image forming unit 20.

The image reading unit 10 may be configured to read an image of a print medium 8. The image reading unit 10 may include a feed tray 12, an image sensor 13, and a discharge tray 14. The image reading unit 10 may have an ADF (Auto Document Feeder) function. The feed tray 12 may contain the print medium 8 set thereon and from which an image is to be read. An image sensor 13 may be a sensor that reads the image. The discharge tray 14 may discharge the print medium 8 from which the image has been read.

With this configuration, the image reading unit 10 may convey the print medium 8 set on the feed tray 12 to the image sensor 13 along a conveying path 9A. The image reading unit 10 may guide, to the discharge tray 14, the print medium 8 from which the image has been read by the image sensor 13. The image reading unit 10 may also have a function of turning the print medium 8 over by conveying the print medium 8 along a conveying path 9B. This makes it possible for the image reading unit 10 to read the images included on both sides of the print medium 8.

The image reading unit 10 may also have a function of conveying the print medium 8, from which the image has been read, to the image forming unit 20 along a conveying path 9C.

The image forming unit 20 may be configured to form the image to the print medium 8. The image forming unit 20 may include a feed tray 21, four ID (Image Dram) units 22 (22K, 22Y, 22M, 22C), four light sources 24 (24K, 24Y, 24M, 24C), four transfer rollers 25 (25K, 25Y, 25M, 25C), a fixing section 26, and a discharge tray 27.

The feed tray 21 may contain the print medium 8 set thereon and on which the image is to be formed.

The four ID units 22 may respectively form toner images. Specifically, the ID unit 22K may form a black toner image, the ID unit 22Y may form a yellow toner image, the ID unit 22M may form a magenta toner image, and the ID unit 22C may form a cyan toner image. The ID units 22K, 22Y, 22M, and 22C may be disposed in this order in a conveyance direction F.

The ID units 22 each may have a photoreceptor 23. The photoreceptor 23 may be a member that supports an electrostatic latent image on a surface (a surface layer) thereof. Specifically, a photoreceptor 23K of the ID unit 22K may form the electrostatic latent image by being exposed by the light source 24K, the photoreceptor 23Y of the ID unit 22Y may form the electrostatic latent image by being exposed by the light source 24Y, the photoreceptor 23M of the ID unit 22M may form the electrostatic latent image by being exposed by the light source 24M, and the photoreceptor 23C of the ID unit 22C may form the electrostatic latent image by being exposed by the light source 24C. Each photoreceptor 23 may form the toner image, based on the corresponding electrostatic latent image.

The four light sources 24 may be members that respectively irradiate the photoreceptors 23 of the four ID units 22 with light. Specifically, the light source 24K may irradiate the photoreceptor 23K with light, the light source 24Y may irradiate the photoreceptor 23Y with light, the light source 24M may irradiate the photoreceptor 23M with light, and the light source 24C may irradiate the photoreceptor 23C with light. With this configuration, the photoreceptors 23 may be respectively exposed by the light sources 24.

The four transfer rollers 25 may be members that respectively transfer, in an electrostatic manner, the toner images formed by the four ID units 22 onto a surface to be transferred of the print medium 8. The transfer roller 25K may be disposed to oppose the photoreceptor 23K via a conveyance path 9E, the transfer roller 25Y may be disposed to oppose the photoreceptor 23Y via the conveyance path 9E, the transfer roller 25M may be disposed to oppose the photoreceptor 23M via the conveyance path 9E, and the transfer roller 25C may be disposed to oppose the photoreceptor 23C via the conveyance path 9E. With this configuration, the image forming unit 20 may transfer the toner image formed by each ID unit 22 onto the surface to be transferred of the print medium 8.

The fixing section 26 may be a member that fixes the toner images transferred onto the print medium 8 by applying heat and pressure to the print medium 8. The fixing section 26 may include a heat roller 26A and a pressure applying roller 26B. The heat roller 26A may be a member that includes, for example, a heater such as a halogen lamp, and may apply the heat to the toner on the print medium 8. The pressure applying roller 26B may be a member that is disposed such that a pressure contact part is formed between the heat roller 26A and the pressure applying roller 26B, and applies the pressure to the toner on the print medium 8. With this configuration, the toners on the print medium 8 may be heated, melted, and pressurized by the fixing part 26. As a result, the toner images may be fixed to the print medium 8.

The discharge tray 27 may discharge the print medium 8 on which the image has been formed.

With this configuration, the image forming unit 20 may convey the print medium 8 conveyed from the image reading unit 10 along the conveyance path 9C, or may convey the print medium 8 conveyed from the feed tray 21 along the conveyance path 9D, to the four ID units 22 along the conveyance path 9E. Thereafter, the image forming unit 20 may convey the print medium 8, onto which the toner images have been transferred by the four ID units 22, to the fixing section 26 along the conveyance path 9E. Thereafter, the image forming unit 20 may convey the print medium 8, to which the toner images have been fixed, to the discharge tray 27 along the conveyance path 9E. The image forming unit 20 may perform printing on the print medium 8 in the manner described above.

In the image forming apparatus 1, based on print data DP supplied from a later-described host PC 40, the image reading unit 10 may read the image of the print medium 8 set on the feed tray 12, and may thereby generate scan data DS. Thereafter, the image forming apparatus 1 may modify the print data DP, based on the scan data DS. Thereafter, the image forming unit 20 may perform printing on the print medium 8 from which the image has been read, based on the modified print data DP.

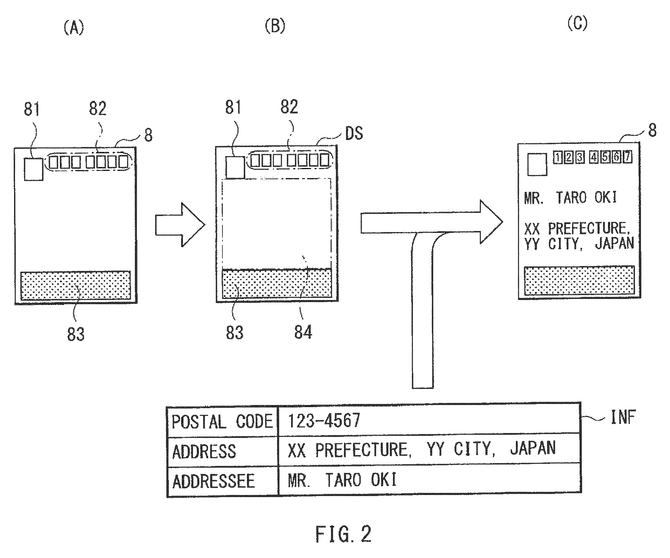

FIG. 2 illustrates a non-limiting example of an operation in the image forming apparatus 1. In this example, the print medium 8 may be a postcard used in Japan. The postcard may include a postage stamp field 81, a postal code field 82, and an advertisement 83 (see (A) of FIG. 2). The image reading unit 10 may read the postcard, and may thereby generate the scan data DS (see (B) of FIG. 2). The print data DP supplied from the later-described host PC 40 may contain additional information INF such as, but not limited to, a postal code, an address, and an addressee. Based on the scan data DS, the image forming apparatus 1 may determine a print position and a size of, such as, but not limited to, the postal code, the address, and the addressee, and may modify the print data DP. Thereafter, as illustrated in (C) of FIG. 2, the image forming unit 20 may perform, based on the modified print data DP, printing on the postcard of the information such as, but not limited to, the postal code, the address, the addressee. In one specific but non-limiting example, the image formation unit 20 may print the postal code in the postal code field 82, and may print the address and the addressee in a print target region 84.

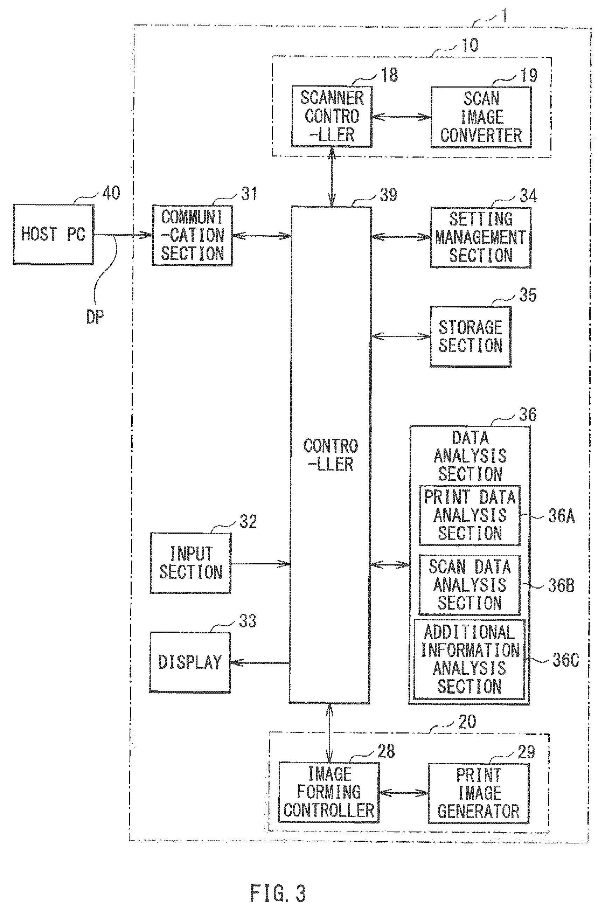

FIG. 3 illustrates an example of a control mechanism of the image forming apparatus 1. The image forming apparatus 1 may include a communication section 31, a scanner controller 18, a scan image converter 19, an input section 32, a display 33, a setting management section 34, a storage section 35, a data analysis section 36, an image forming controller 28, a print image generator 29, and a controller 39.

In this example, the communication section 31 may receive the print data DP from the host PC (Personal Computer) 40. The communication section 31 may be coupled to the host PC 40 via a USB (Universal Serial Bus) or may be coupled to the host PC 40 via a LAN (Local Area Network) without limitation.

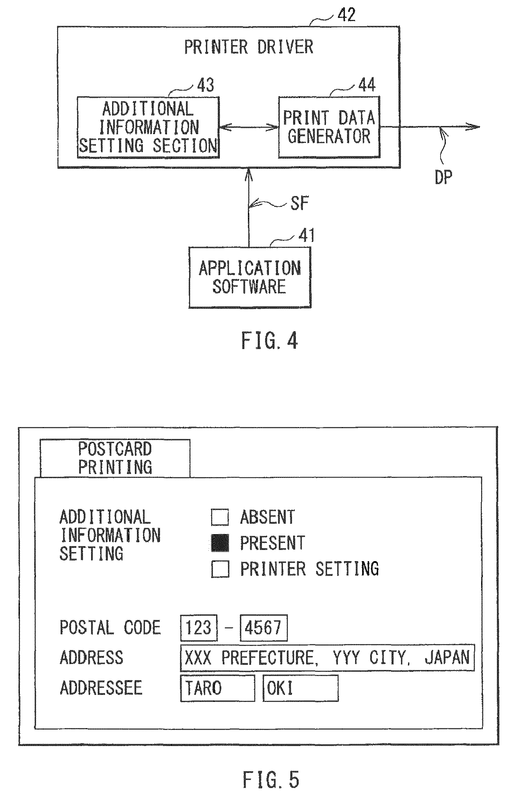

FIG. 4 illustrates an example of a software configuration of the host PC 40. The host PC 40 may have application software 41 and a printer driver 42 installed therein. The application software 41 may be, for example not limited to, word processor software, spreadsheet software, or any other software, and may supply a spool file SF to the printer driver 42, based on print instructions given from a user. The printer driver 42 may be a so-called device driver that controls an operation of the image forming apparatus 1. The printer driver 42 may include an additional information setting section 43 and a print data generator 44.

The additional information setting section 43 may set the additional information INF. Specifically, the additional information setting section 43 may display an interface screen to the user, may receive an input of information inputted by the user, and may set the additional information INF, based on the inputted information.

FIG. 5 illustrates a non-limiting example of the interface screen. The interface screen may show a setting screen of the additional information INF for postcard printing. In this example, the additional information setting is set as "PRESENT". In this case, the user is allowed to input the postal code, the address, and the addressee. The additional information setting section 43 may generate the additional information INF, based on these pieces of information. It is to be noted that, in this example, the user directly inputs the postal code, the address, and the addressee, but it is not limited thereto. Alternatively, contents of a database including the postal code, the address, the addressee, or any other information stored in the host PC 40 may be read.

When the additional information setting is set as "ABSENT" in the interface screen, the additional information setting section 43 may not generate any additional information INF. Further, when the additional information setting is set as "PRINTER SETTING", the additional information INF generated by the image forming apparatus 1 may be used. In one specific but non-limiting example, the user may directly operate the image forming apparatus 1 to read the postal code, the address, and the addressee from a name card without limitation, thereby generating the additional information INF. When the additional information setting is set as "PRINTER SETTING", the additional information INF generated in this manner may be used.

The print data generator 44 (see FIG. 4) may generate the print data DP, based on the spool file SF. The print data DP may be described in, for example but not limited to, a Page Description Language (PDL). When the additional information setting is set as "PRESENT", the print data generator 44 may generate the print data DP, based on the additional information INF generated by the additional information setting section 43. The print data generator 44 may estimate factors including, without limitation, the print position and the size of the postal code, the address, and the addressee to be printed in the postcard, and may generate the print data DP, based on the estimated result. Further, when the additional information setting is set as "PRINTER SETTING", the print data generator 44 may cause the print data DP to include information indicating that the image formation is to be performed by using the additional information INF generated by the image forming apparatus 1.

The scanner controller 18 (see FIG. 3) may control an operation of each member of the image reading unit 10, based on instructions received from the controller 39. The scan image converter 19 may convert the image read by the image sensor 13 into a predetermined data format, based on instructions received from the scanner controller 18.

The input section 32 may be an input interface used when the user operates the image forming apparatus 1, and may include members such as, but not limited to, various buttons and a touch panel. The display 33 may display a state of the image forming apparatus 1 and any other information, and may be configured by, for example but not limited to, a liquid crystal display panel. The setting management section 34 may manage various settings of the image forming apparatus 1.

The storage section 35 may store various pieces of data to be handled by the image forming apparatus 1. The various pieces of data may be, for example but not limited to, the print data DP, the scan data DS, and the additional information INF. The storage section 35 may include such as, but not limited to, a HDD (Hard Disk Drive) and a RAM (Random Access Memory).

The data analysis section 36 may include a print data analysis section 36A, a scan data analysis section 36B, and an additional information analysis section 36C. The print data analysis section 36A may analyze the print data DP. The scan data analysis section 36B may analyze the scan data DS. The additional information analysis section 36C may analyze the additional information INF.

The image forming controller 28 may control an operation of each member of the image forming unit 20, based on the instructions received from the controller 39. The print image generator 29 may generate a print image, based on the instructions received from the image forming controller 28. In one specific but non-limiting example, as described below, the print image generator 29 may have, for example, functions of modifying the print data DP, based on the analysis result obtained by the data analysis section 36, and generating intermediate image data DP2, based on the modified print data DP.

The controller 39 may control an operation of each block in the image forming apparatus 1.

In one embodiment, the image reading unit 10 corresponds to a concrete but non-limiting example of a "reader". The print data analysis section 36A and the print image generator 29 correspond to a concrete but non-limiting example of a "modifying section". The image forming unit 20 corresponds to a concrete but non-limiting example of an "image forming section". The postal code field 82 corresponds to a concrete but non-limiting example of a "specific pattern".

### [Operation and Workings]

In the following, a description is given of an operation and workings of the image forming apparatus 1 according to this example embodiment.

### [Outline of Overall Operation]

First, a description is given with reference to FIG. 3 of an outline of an overall operation of the image forming apparatus 1. The communication section 31 may receive the print data DP supplied from the host PC 40. The scanner controller 18 may control an operation of each member in the image reading unit 10. Thus, the image reading unit 10 may read the image of the print medium 8. The scan image converter 19 may generate the scan data DS by converting the read image into a predetermined data format. The storage section 35 may store the print data DP, the scan data DS, and the additional information INF. In the data analysis section 36, the print data analysis section 36A may analyze the print data DP, the scan data analysis section 36B may analyze the scan data DS, and the additional information analysis section 36C may analyze the additional information INF. The print image generator 29 may modify the print data DP, based on the analysis result by the data analysis section 36, and may generate the intermediate image data DP2, based on the modified print data DP. The image forming controller 28 may control an operation of each member contained in the image forming unit 20, based on the intermediate image data DP2. Thus, the image forming unit 20 may perform printing on the print medium 8 from which the image has been read by reading unit 10.

### [Detailed Operation]

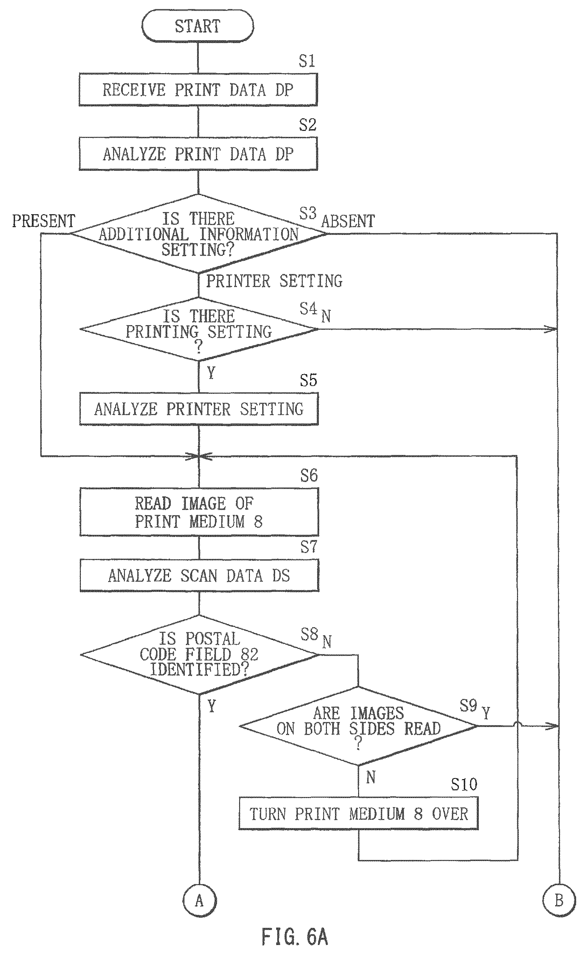

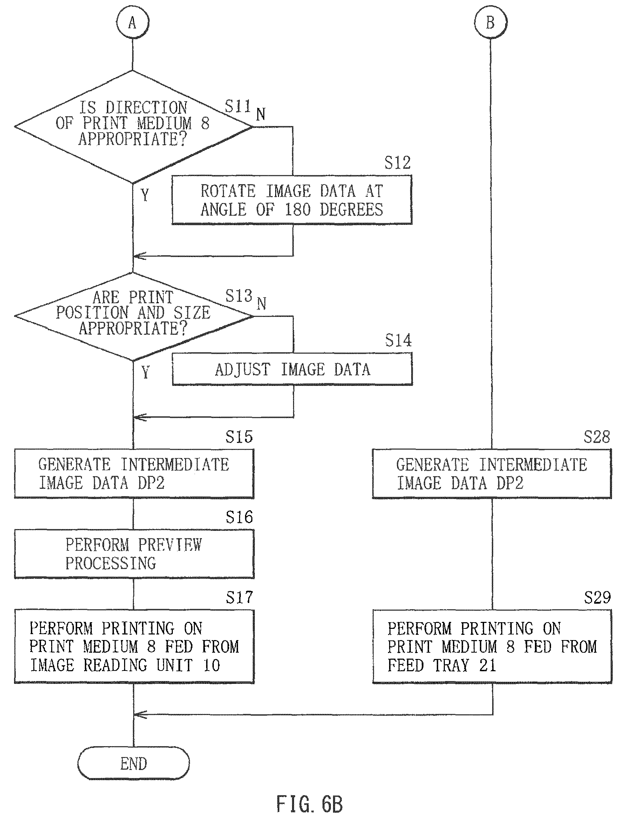

FIGs. 6A and 6B each illustrate an example of an operation of the image forming apparatus 1. FIGs. 6A and 6B each illustrate a non-limiting example where the postcard is used as the print medium 8 as illustrated in FIG. 2. When the image forming apparatus 1 receives the print data DP from the host PC 40, the image forming apparatus 1 may first analyze the print data DP. Thereafter, the image forming apparatus 1 may generate the scan data DS by reading the image of the print medium 8, and may analyze the scan data DS. Based on the analysis result, the image forming apparatus 1 may modify the print data DP. Thereafter, the image forming apparatus 1 may perform, based on the modified print data DP, printing on the print medium 8 from which the image has been read. In the following, a description is given in detail of such an operation.

First, the communication section 31 may receive the print data DP transmitted from the host PC 40 (step S1). Thereafter, the storage section 35 may store the print data DP.

Thereafter, the print data analysis section 36A may analyze the print data DP (step S2). The print data analysis section 36A may thereafter extract the additional information setting from the print data DP.

Thereafter, the additional information analysis section 36C may confirm the additional information setting (step S3). Specifically, when the print data DP contains the additional information INF, the additional information analysis section 36C may determine that the additional information setting is "PRESENT". When the print data DP contains the information indicating that the image formation is to be performed by using the additional information INF generated by the image forming apparatus 1, the additional information analysis section 36C may determine that the additional information setting is "PRINTER SETTING". Otherwise, the additional information analysis section 36C may determine that the additional information setting is "ABSENT".

In the step S3, when a determination is made that the additional information setting is "PRESENT" ("PRESENT" in the step S3), the process may proceed to step S6. When a determination is made that the additional information setting is "ABSENT" ("ABSENT" in the step S3), the print image generator 29 may generate the intermediate image data DP2, based on the print data DP (step S28), and the image forming unit 20 may perform printing on the print medium 8 fed from the feed tray 21 (step S29).

In the step S3, when a determination is made that the additional information setting is "PRINTER SETTING" ("PRINTER SETTING" in the step S3), the setting management section 34 may confirm whether there is any printer setting (step S4). Specifically, the setting management section 34 may confirm whether there is any printer setting, by confirming whether the additional information INF generated by the image forming apparatus 1 is stored in the storage section 35.

In the step S4, when there is a printer setting ("Y" in the step S4), the setting management section 34 may analyze the printer setting (step S5). Thus, the setting management section 34 may acquire the additional information INF generated by the image forming apparatus 1. In the step S4, when there is no printer setting ("N" in the step S4), the process may proceed to step S28.

Thereafter, the image reading unit 10 may read the image of the print medium 8 set on the feed tray 12 (step S6). Thus, the image reading unit 10 may generate the scan data DS. The storage section 35 may thereafter store the scan data DS.

Thereafter, the scan data analysis section 36B may analyze the scan data DS (step S7).

Thereafter, the scan data analysis section 36B may confirm whether the postal code field 82 is identified (step S8). When the postal code field 82 is not identified ("N" in the step S8) and the images on both sides of the print medium 8 are not yet read ("N" in step S9), the image reading unit 10 may turn the print medium 8 over (step S10). Specifically, the scanner controller 18 may turn the print medium 8 over by conveying the print medium 8 along the conveyance path 9B. The process may thereafter return to the step S6, and the processes from the steps S6 to S8 may be repeated. Further, when the images on the both sides of the print medium 8 have been already read ("Y" in the step S9), the scan data analysis section 36B may determine that the print medium 8 is not a postcard in light of the absence of the postal code field 82 on the both sides of the print medium 8. The process may thereafter proceed to the step S28.

In the step S8, when the postal code field 82 is identified ("Y" in the step S8), the scan data analysis section 36B may thereafter confirm whether a direction of the print medium 8 is appropriate (step S11). Specifically, the scan data analysis section 36B may confirm whether the direction of the print medium 8 is appropriate, based on the position of the postal code field 82 in the scan data DS without limitation. When the direction of the print medium 8 is inappropriate ("N" in the step S11), the print image generator 29 may modify the print data DP by rotating the image data indicated by the print data DP at an angle of 180 degrees without limitation (step S 12). The process may thereafter proceed to step S 13.

In the step S 11, when the direction of the print medium 8 is appropriate ("Y" in the step S11), the scan data analysis section 36B may thereafter confirm whether the print position and the size are appropriate (step S13). Specifically, the scan data analysis section 36B may confirm whether the print position and the size of the postal code are appropriate, based on the postal code field 82 of the scan data DS. Further, the scan data analysis section 36B may detect a print target region 84 (see (B) of FIG. 2), based on the scan data DS, and may confirm whether the print position and the size of the address and the addressee are appropriate, based on a position and a size of the print target region 84. When the print position and the size are inappropriate ("N" in the step S13), the print image generator 29 may modify the print data DP by performing adjustment of the image data indicated by the print data DP (step S14). The adjustment may include, without limitation, enlarging or reducing of the image data, and shifting of the position of the image data. The process may thereafter proceed to step S15.

In the step S 13, when the print position and the size are appropriate ("Y" in the step S13), the print image generator 29 may generate the intermediate image data DP2, based on the print data DP (step S 15).

Thereafter, the image forming apparatus 1 may perform preview processing (step S16). Specifically, the controller 39 may superimpose the scan data DS and the intermediate image data DP2 generated by the print image generator 29 to thereby generate a post-printing image as illustrated in (C) of FIG. 2. The display 33 may display the post-printing image.

Thereafter, the image forming unit 20 may perform printing on the print medium 8 fed from the image reading unit 10, based on the intermediate image data DP2 (step S 17).

This may complete an example flow of an operation of the image forming apparatus 1.

As described in the foregoing, the image forming apparatus 1 reads the image of the print medium 8, and modifies, based on the read image, the print data DP. This makes it possible to perform, based on the print medium 8, the printing that is appropriate to the print medium 8 in direction, position, and size. The image forming apparatus 1 thus alleviates a necessity for a user to perform an adjustment of the print position or any other user-required operation, making it possible to improve user-friendliness.

### [Example Effect]

According to the foregoing example embodiment, the image of the print medium is read, and the print data is modified based on the read image. Hence, it is possible to improve the user-friendliness.

### [Modified Embodiment 1-1]

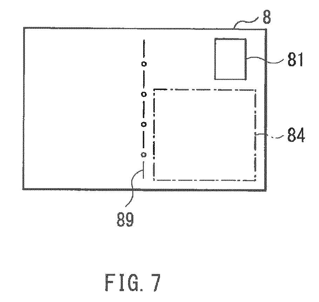

Although the postcard is used as the print medium 8 in the foregoing example embodiment, it is not limited thereto. In a modified embodiment, an envelope may be used as the print medium 8. A picture postcard as illustrated in FIG. 7 may also be used as the print medium 8. The picture postcard may have a postage stamp field 81 and a decoration line 89. In one example illustrated in FIG. 7, the scan data analysis section 36B may detect the print target region 84, based on the scan data DS, and may adjust the print position and the size of the address and the addressee, based on the position and the size of the print target region 84. It is to be noted that the print medium 8 is not limited to the envelope and the picture postcard. Any of various print media having a field for writing predetermined information may be used as the print medium 8.

### [2. Second Example Embodiment]

Next, a description is given of an image forming apparatus 2 according to a second example embodiment. In the second example embodiment, the image of the print medium 8 is read, and the additional information INF is generated based on the read image. Note that the same or equivalent elements as those of the first example embodiment described above are denoted with the same reference numerals, and will not be described in detail.

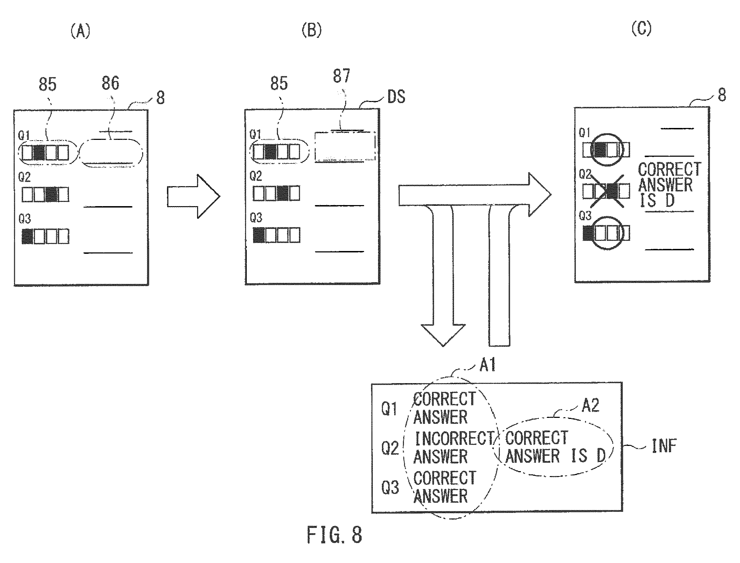

FIG. 8 illustrates a non-limiting example of an operation in the image forming apparatus 2. In this example, the print medium 8 may be a mark sense answer sheet that may be used upon a multiple-choice examination. The mark sense answer sheet may include a mark 85 and an answer field 86 (see (A) of FIG. 8). As for the mark 85, one of multiple fields is already blacked out by an examinee with a pencil or any other writing instrument. In this example, the mark 85 may contain four fields corresponding to respective answer choices of A. B, C, and D of the multiple-choice examination. The answer field 86 may be a field in which a correct answer (answer information A2 to be described later) is to be printed by the image forming apparatus 2 when the examinee's answer is incorrect. The image reading unit 10 may read the answered mark sense answer sheet, and may generate the scan data DS ((B) of FIG. 8). Further, the image forming apparatus 2 may supply the scan data DS to the server 50. The server 50 may perform scoring processing, based on the scan data DS, and may generate the additional information INF, based on the processing result. The additional information INF may contain information A1 that indicates whether the answer is correct or incorrect for each question. Further, the additional information INF may contain the answer information A2 that indicates the correct answer for the incorrectly-answered question. The server 50 may generate the print data DP, based on the additional information INF, and may supply the print data DP to the image forming apparatus 2. The image forming apparatus 2 may modify the print data DP, based on the scan data DS, in the same manner as the foregoing first example embodiment. Thereafter, the image forming unit 20 may perform printing on the print medium 8 as illustrated in (C) of FIG. 8, based on the modified print data DP. Upon performing the printing, the image forming unit 20 may print "O" or "X" in a superimposed fashion on the mark 85, based on the information A1, where "O" may denote the correct answer and "X" may denote the incorrect answer. Moreover, the image forming unit 20 may print the answer information A2 to the answer field 86.

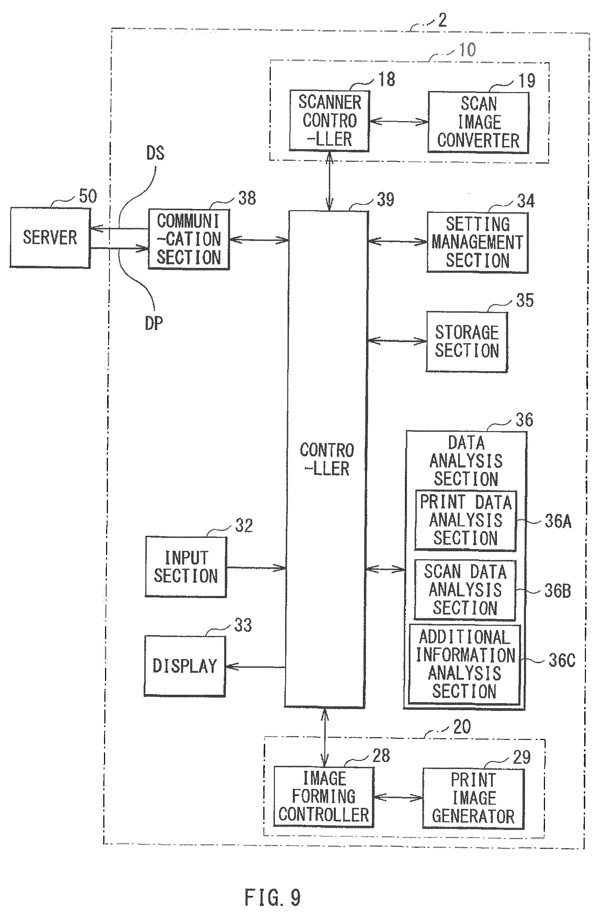

FIG. 9 illustrates an example of a control mechanism in the image forming apparatus 2. The image forming apparatus 2 may include a communication section 38. In this example, the communication section 38 may supply the scan data DS to the server 50 and receive the print data DP from the server 50. The server 50 may perform the scoring processing, based on the scan data DS, and may generate the additional information INF, based on the processing result. Thereafter, the server 50 may generate the print data DP, based on the additional information INF.

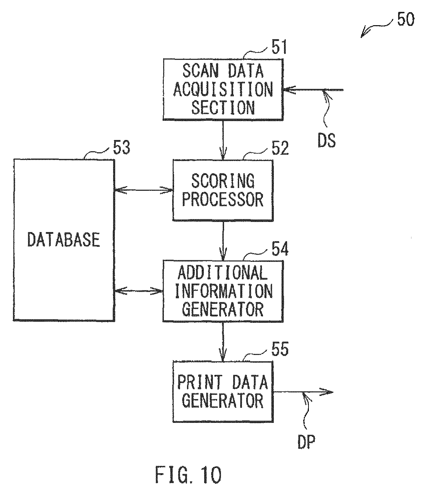

FIG. 10 illustrates an example of a software configuration of the server 50. The server 50 may include a scan data acquisition section 51, a scoring processor 52, a database 53, an additional information generator 54, and a print data generator 55.

The scan data acquisition section 51 may acquire the scan data DS supplied from the image forming apparatus 2.

The scoring processor 52 may perform the scoring processing, based on the scan data DS. The database 53 may be used upon the scoring processing performed by the scoring processor 52.

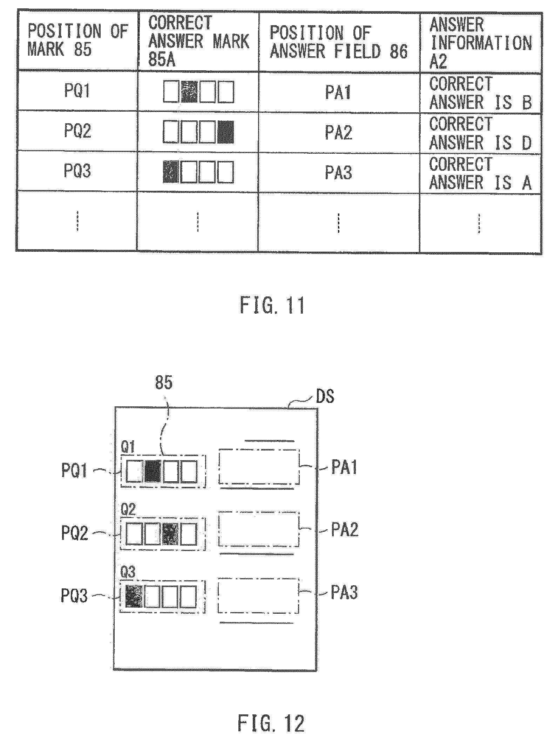

FIG. 11 illustrates an example of a configuration of the database 53. FIG. 12 illustrates positions of the mark 85 and the answer field 86 in the scan data DS. Referring to FIG. 11, the position of the mark 85, a correct answer mark 85A, the position of the answer field 86, and the answer information A2 may be associated with each other in the database 53. Positions PQ1, PQ2, PQ3, etc., of the mark 85 may be set corresponding to respective questions. Similarly, positions of PA1, PA2, PA3, etc., of the answer field 86 may be set corresponding to the respective questions. The correct answer marks 85A may denote the correct answers for the respective questions. The answer information A2 may denote the correct answer for each question, and may be printed in any answer field 86.

The scoring processor 52 may perform the following example scoring processing using the database 53. The scoring processor 52 may detect whether the correct answer marks 85A corresponding to the respective position of PQ1, PQ2, PQ3, etc., are present at or near those positions PQ1, PQ2, PQ3, etc., based on the scan data DS. By detecting the presence of the correct answer marks 85A, the scoring processor 52 may determine whether the answer is correct or incorrect for each question. In an example illustrated in FIG. 12, the mark 85 near the position PQ1 coincides with the correct answer mark 85A (FIG. 11) corresponding to the position PQ1, whereby the scoring processor 52 may determine that the answer of question 1 (Q1) is correct. The mark 85 near the position PQ2 does not coincide with the correct answer mark 85A (FIG. 11) corresponding to the position PQ2, whereby the scoring processor 52 may determine that the answer of question 2 (Q2) is incorrect. The mark 85 near the position PQ3 coincides with the correct answer mark 85A (FIG. 11) corresponding to the position PQ3, whereby the scoring processor 52 may determine that the answer of question 3 (Q3) is correct. The scoring processor 52 may perform the scoring processing by determining whether the answer for each question is correct or incorrect in this manner.

The additional information generator 54 (FIG. 10) may generate the additional information INF as illustrated in FIG. 8, based on the scoring result derived from the scoring processor 52. The additional information generator 54 may generate the additional information INF, based on the information A1 that indicates whether the answer is correct or incorrect for each question and on the answer information A2 that indicates the correct answer for the incorrectly-answered question.

The print data generator 55 may generate the print data DP, based on the additional information INF generated by the additional information generator 54. The print data DP may be described in, for example but not limited to, the Page Description Language. The print data generator 55 may estimate the print position and the size of "O" or "X" corresponding to the information A1 and the print position and the size of the answer information A2 in the mark sense answer sheet, and may generate the print data DP, based on the estimated result. Upon generating the print data DP, the print data generator 55 may dispose "O" or "X" on the mark 85 in a superimposed fashion, based on the information A1. Further, the print data generator 55 may detect the print target region 87 ((B) of FIG. 8), based on the scan data DS, and may dispose at least a part of the answer information A2 in the print target region 87.

In one embodiment, the scoring processor 52 and the database 53 correspond to a concrete but non-limiting example of a "detector". The additional information generator 54 corresponds to a concrete but non-limiting example of a "processor". The print data generator 55 corresponds to a concrete but non-limiting example of a "generator". The mark 85 and the correct answer mark 85A correspond to a concrete but non-limiting example of the "specific pattern".

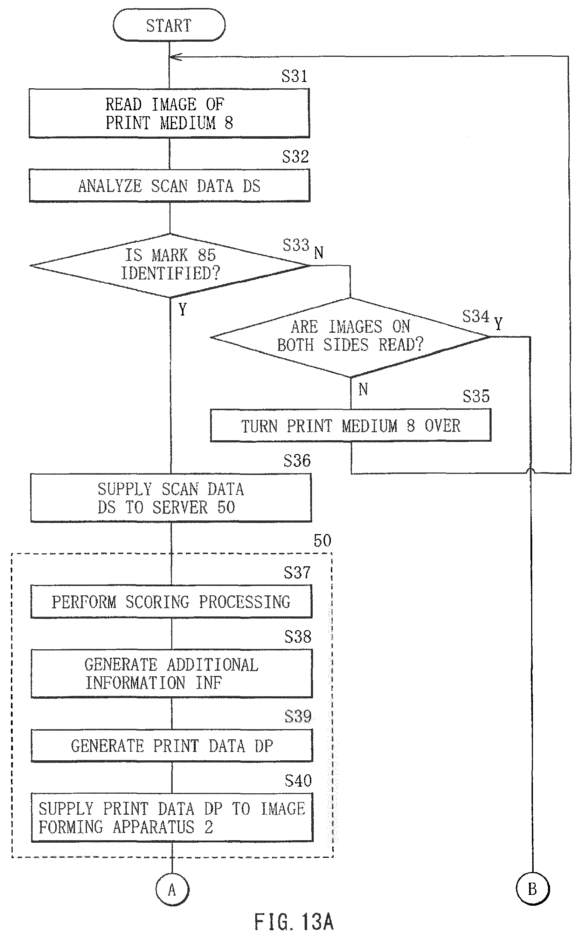

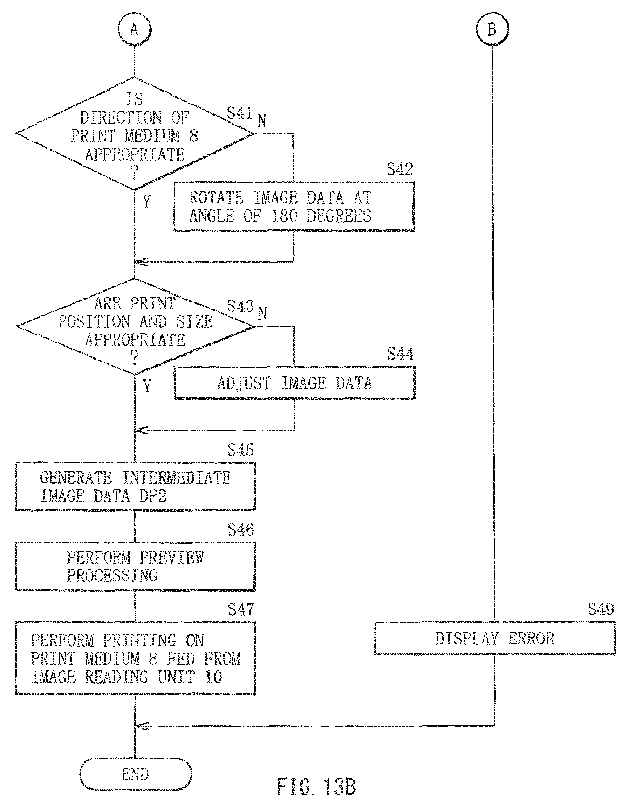

FIGs. 13A and 13B each illustrate an example of an operation of the image forming apparatus 2. FIGs. 13A and 13B illustrate a non-limiting example where the mark sense answer sheet is used as the print medium 8 as illustrated in FIG. 8. First, the image forming apparatus 2 may generate the scan data DS by reading the image of the print medium 8, and may supply the scan data DS to the server 50. The server 50 may perform the scoring processing, based on the scan data DS, and may generate the additional information INF, based on the scoring result. The server 50 may thereafter generate the print data DP, based on the additional information INF, and may supply the print data DP to the image forming apparatus 2. The image forming apparatus 2 may analyze the scan data DS, and may modify, based on the analysis result, the print data DP. The image forming apparatus 2 may thereafter perform, based on the modified print data DP, printing on the print medium 8 from which the image has been read. In the following, a description is given in detail of such an operation.

First, the image reading unit 10 may read the image of the print medium 8 set on the feed tray 12 (step S31). Thus, the image reading unit 10 may generate the scan data DS. The storage section 35 may thereafter store the scan data DS.

Thereafter, the scan data analysis section 36B may analyze the scan data DS (step S32).

Thereafter, the scan data analysis section 36B may confirm whether the mark 85 is identified (step S33). When the mark 85 is not identified ("N" in the step S33) and the images on both sides of the print medium 8 are not yet read ("N" in step S34), the image reading unit 10 may turn the print medium 8 over (step S35). The process may thereafter return to the step S31, and the processes from the steps S31 to S33 may be repeated. When the images on the both sides of the print medium 8 has been already read ("Y" in the step S34), the scan data analysis section 36B may determine that the print medium 8 is not the mark sense answer sheet in light of the absence of the mark 85 on the both sides of the print medium 8. allowing the display 33 to display an error (step S49).

In the step S33, when the mark 85 is identified ("Y" in the step S33), the communication section 38 may supply the scan data DS to the server 50 (step S36). The scan data acquisition section 51 of the server 50 may acquire the scan data DS.

Thereafter, the scoring processor 52 of the server 50 may perform the scoring processing using the database 53 (step S37). Thereafter, the additional information generator 54 may generate the additional information INF as illustrated in FIG. 8, based on the scoring result derived from the scoring processor 52 (step S38). Thereafter, the print data generator 55 may generate the print data DP, based on the additional information INF generated by the additional information generator 54 (step S39). Upon generating the print data DP, the print data generator 55 may estimate the print position and size of "O" or "X" corresponding to the information A1 and the print position and size of the answer information A2 in the mark sense answer sheet, and may generate the print data DP, based on the estimated result. Thereafter, the print data generator 55 may supply the print data DP to the image forming apparatus 2 (step S40).

Thereafter, the scan data analysis section 36B of the image forming apparatus 2 may confirm whether a direction of the print medium 8 is appropriate (step S41). Specifically, the scan data analysis section 36B may confirm whether the direction of the print medium 8 is appropriate, based on the position of the mark 85 in the scan data DS without limitation. When the direction of the print medium 8 is inappropriate ("N" in the step S41), the print image generator 29 may modify the print data DP by rotating the image data indicated by the print data DP at an angle of 180 degrees without limitation (step S42). The process may thereafter proceed to step S43.

In the step S41, when the direction of the print medium 8 is appropriate ("Y" in the step S41), the scan data analysis section 36B may thereafter confirm whether the print position and the size are appropriate (step S43). Specifically, the scan data analysis section 36B may confirm whether the print position and the size of "O" or "X" corresponding to the information A1 are appropriate, based on the position of the mark 85 in the scan data DS. Further, the scan data analysis section 36B may detect the print target region 87 (see (B) of FIG. 8), based on the scan data DS, and may confirm whether the print position and the size of the answer information A2 are appropriate, based on the position and the size of the print target region 87. When the print position and the size are inappropriate ("N" in the step S43), the print image generator 29 may modify the print data DP by performing the adjustment of the image data indicated by the print data DP (step S44). The adjustment may include, without limitation, enlarging or reducing of the image data, and shifting of the position of the image data. The process may thereafter proceed to step S45.

In the step S43, when the print position and the size are appropriate ("Y" in the step S43), the print image generator 29 may generate the intermediate image data DP2, based on the print data DP (step S45).

Thereafter, the image forming apparatus 2 may perform the preview processing (step S46). Specifically, the controller 39 may super impose the scan data DS and the intermediate image data DP2 generated by the print image generator 29 to thereby generate the post-printing image as illustrated in (C) of FIG. 8. The display 33 may display the post-printing image.

Thereafter, the image forming unit 20 may perform printing on the print medium 8 fed from the image reading unit 10, based on the intermediate image data DP2 (step S47).

This may complete an example flow of an operation of the image forming apparatus 2.

As described in the foregoing, the image forming apparatus 2 may read the image of the print medium 8, and the server 50 may generate the additional information INF, based on the image read by the image forming apparatus 2. This makes it possible to increase flexibility of processing, and thereby to improve user-friendliness.

Further, the image forming apparatus 2 may read the image of the print medium 8, and may modify the print data DP, based on the read image. Hence, it is possible to improve the user-friendliness as with the image forming apparatus 1 according to the first example embodiment.

According to the second example embodiment, the image of the print medium is read, and the additional information is generated based on the read image. Hence, it is possible to improve the user-friendliness. Other effects to be achieved by the second example embodiment may be the same as those of the first example embodiment described above.

### [Modified Embodiment 2-1]

Although the mark sense answer sheet is used as the print medium 8 in the foregoing example embodiment, it is not limited thereto. Any of various print media having the field for writing the predetermined information may be used as the print medium 8.

### [Modified Embodiment 2-2]

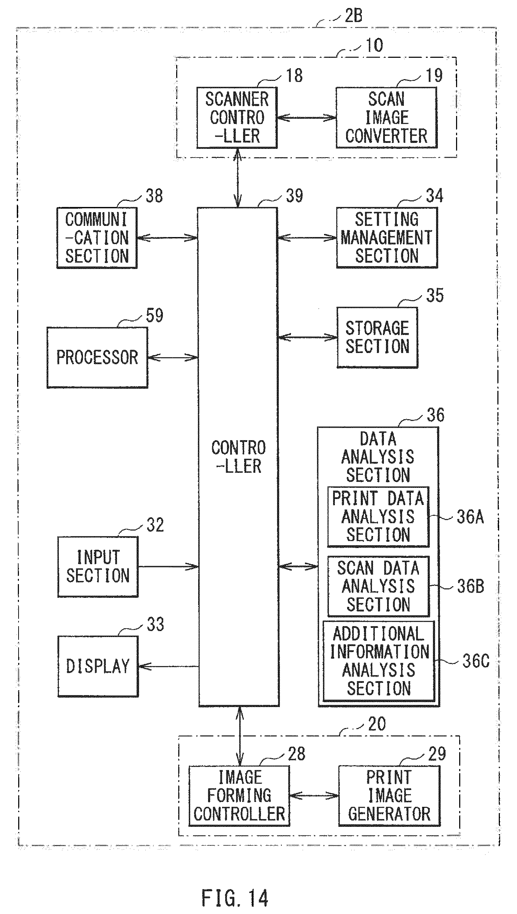

Although the server 50 performs the scoring processing in the foregoing example embodiment, it is not limited thereto. Alternatively, for example, the host PC 40 may perform the scoring processing. Further, for example, an image forming apparatus 2B as illustrated in FIG. 14 itself may perform the scoring processing. The image forming apparatus 2B may include a processor 59. The processor 59 may perform the scoring processing. Specifically, the processor 59 may have functions similar to those of the scoring processor 52, the database 53, the additional information generator 54, and the print data generator 55 according to the foregoing example embodiment.

### [Modified Embodiment 2-3]

Although the scoring processor 52 may make a determination as to whether the answer is correct or incorrect for each question in the foregoing example embodiment, it is not limited thereto. The scoring processor 52 may also acquire the examinee's answer. Further, the additional information generator 54 may generate the additional information INF, based on the examinee's answer in addition to the scoring result derived from the scoring processor 52. The additional information INF may further include a commentary that is based on the examinee's answer.

Although the invention has been described in the foregoing by way of example with reference to the example embodiment and its various modified embodiments as described above, the invention is not limited thereto but may be modified in a wide variety of ways as described below as some modified embodiments.

For example, although, in each of the example embodiments and the modified embodiments described above, the printing is performed on the print medium 8 from which the image has been read, based on the modified print data DP, it is not limited thereto. Alternatively, the printing may be performed on any other print medium 8 that is different from the print medium 8 from which the image has been read. Specifically, for example, the scan data DS and the intermediate image data DP2 generated by the print image generator 29 may be superimposed in a manner similar to the preview processing, and the superimposed image may be printed onto the print medium 8 that is different from the print medium 8 from which the image has been read.

Although, in each of the example embodiments and the modified embodiments described above, the processing result is printed onto the print medium 8, it is not limited thereto. Alternatively, the processes described above may be completed without involving the printing. For example, the preview processing may generate an image, and the generated image may be stored. In this modified embodiment, a so-called smartphone having a camera function, or any other device having a camera function, may be used instead of the host PC 40, the server 50, and one of the image forming apparatuses 1 and 2.

In an example where such a modified embodiment is applied to the first example embodiment, first, the smartphone may generate the print data DP (the additional information INF) and may generate the scan data DS by talking an image of the print medium 8. Thereafter, based on the print data DP and the scan data DS, the smartphone may perform the processes same as those of the foregoing first example embodiment. Thereafter, the smartphone may perform the preview processing, and may store the image generated by the preview processing.

In an example where such a modified embodiment is applied to the second example embodiment, first, the smartphone may generate the scan data DS by taking an image of the print medium 8, and may generate the print data DP (the additional information INF), based on the thus-generated scan data DS. Thereafter, based on the print data DP and the scan data DS, the smartphone may perform the processes same as those of the foregoing second example embodiment. Thereafter, the smartphone may perform the preview processing, and may store the image generated by the preview processing.

Furthermore, the invention encompasses any possible combination of some or all of the various embodiments and the modification examples described herein and incorporated herein.

It is possible to achieve at least the following configurations from the above-described example embodiments of the invention.
(1) An image processor, including:
   a detector configured to detect whether a specific pattern is present at a first position in first image data;
   a processor configured to generate data information, based on a detection result derived from the detector; and
   a generator configured to generate second image data by disposing the data information at a second position that corresponds to the first position.
(2) The image processor according to (1), wherein
   the processor includes a database configured to store a plurality of data sets in each of which the specific pattern, the first position, and the data information are associated with each other, and
   the processor generates the data information by using the database, based on the detection result derived from the detector.
(3) The image processor according to (2), wherein
   each of the data sets is further associated with the second position, and
   the processor generates the second position in addition to the data information.
(4) The image processor according to any one of (1) to (3), wherein
   the detector further detects a print target region at the second position, and
   the generator disposes at least a part of the data information in the print target region.
(5) The image processor according to any one of (1) to (4), further including a reader configured to read the first image data from a first print medium.
(6) The image processor according to any one of (1) to (5), wherein the generator generates the second image data by disposing the data information on the first image data in a superimposed fashion.
(7) The image processor according to (6), further including a display configured to display the second image data.
(8) The image processor according to (6) or (7), further including an image forming section configured to form an image on a second print medium, based on the second image data.
(9) The image processor according to (5), further including an image forming section configured to form an image on the first print medium, based on the second image data.
(10) An image forming apparatus, including:
   a reader configured to read first image data from a first print medium;
   a modifying section configured to modify second image data, based on the first image data; and
   an image forming section configured to form an image, based on the second image data modified by the modifying section.
(11) The image forming apparatus according to (10), further including a communication section configured to receive the second image data.
(12) The image forming apparatus according to (10), further including a generator configured to generate the second image data.
(13) The image forming apparatus according to any one of (10) to (12), wherein the modifying section detects a specific pattern in the first image data, and modifies the second image data, based on a detection result of the specific pattern.
(14) The image forming apparatus according to any one of (10) to (13), wherein the modifying section modifies the second image data by changing a position of at least a part of the second image data.
(15) The image forming apparatus according to any one of (10) to (14), wherein the modifying section modifies the second image data by enlarging or reducing at least a part of the second image data.
(16) The image forming apparatus according to any one of (10) to (15), wherein the image forming section forms an image on the first print medium, based on the modified second image data.
(17) The image forming apparatus according to any one of (10) to (15), wherein the image forming section forms an image on the second print medium, based on the first image data and the modified second image data.

Although the invention has been described in terms of exemplary embodiments, it is not limited thereto. It should be appreciated that variations may be made in the described embodiments by persons skilled in the art without departing from the scope of the invention as defined by the following claims. The limitations in the claims are to be interpreted broadly based on the language employed in the claims and not limited to examples described in this specification or during the prosecution of the application, and the examples are to be construed as non-exclusive. For example, in this disclosure, the term "preferably", "preferred" or the like is non-exclusive and means "preferably", but not limited to. The use of the terms first, second, etc. do not denote any order or importance, but rather the terms first, second, etc. are used to distinguish one element from another. The term "substantially" and its variations are defined as being largely but not necessarily wholly what is specified as understood by one of ordinary skill in the art. The term "about" or "approximately" as used herein can allow for a degree of variability in a value or range. Moreover, no element or component in this disclosure is intended to be dedicated to the public regardless of whether the element or component is explicitly recited in the following claims.

## Claims

1. An image processor (2), comprising:
a detector (52, 53) configured to detect whether a specific pattern (82, 85, 85A) is present at a first position in first image data;
a processor (54) configured to generate data information, based on a detection result derived from the detector; and
a generator (55) configured to generate second image data by disposing the data information at a second position that corresponds to the first position.

2. The image processor (2) according to claim 1, wherein
the processor (54) includes a database (53) configured to store a plurality of data sets in each of which the specific pattern (82, 85, 85A), the first position, and the data information are associated with each other, and
the processor (54) generates the data information by using the database (53), based on the detection result derived from the detector (52, 53).

3. The image processor (2) according to claim 2, wherein
each of the data sets is further associated with the second position, and
the processor (54) generates the second position in addition to the data information.

4. The image processor (2) according to any one of claims 1 to 3, wherein
the detector (52, 53) further detects a print target region (87) at the second position, and
the generator (55) disposes at least a part of the data information in the print target region (87).

5. The image processor (2) according to any one of claims 1 to 4, further comprising a reader (10) configured to read the first image data from a first print medium.

6. The image processor (2) according to any one of claims 1 to 5, wherein the generator (55) generates the second image data by disposing the data information on the first image data in a superimposed fashion.

7. The image processor (2) according to claim 6, further comprising a display (33) configured to display the second image data.

8. The image processor (2) according to claim 6 or 7, further comprising an image forming section (20) configured to form an image on a second print medium, based on the second image data.

9. The image processor (2) according to claim 5, further comprising an image forming section (20) configured to form an image on the first print medium, based on the second image data.

10. An image forming apparatus (1, 2), comprising:
a reader (10) configured to read first image data from a first print medium;
a modifying section (36a, 29) configured to modify second image data, based on the first image data; and
an image forming section (20) configured to form an image, based on the second image data modified by the modifying section.

11. The image forming apparatus (1, 2) according to claim 10, further comprising a communication section (38) configured to receive the second image data.

12. The image forming apparatus (1, 2) according to claim 10, further comprising a generator (55) configured to generate the second image data.

13. The image forming apparatus (1, 2) according to any one of claims 10 to 12, wherein the modifying section (36a, 29) detects a specific pattern (82, 85, 85A) in the first image data, and modifies the second image data, based on a detection result of the specific pattern (82, 85. 85A).

14. The image forming apparatus (1, 2) according to any one of claims 10 to 13, wherein the modifying section (36a, 29) modifies the second image data by changing a position of at least a part of the second image data.

15. The image forming apparatus (1, 2) according to any one of claims 10 to 14, wherein the modifying section (36a, 29) modifies the second image data by enlarging or reducing at least a part of the second image data.
